# EUROPEAN PATENT APPLICATION

(11) **EP 1 100 047 A2**
(43) Date of publication of application: **16.05.2001**
(21) Application number: 00124157.9
(22) Date of filing: 07.11.2000
(51) Int. Cl.: G06T 3/60

(54) **Method and apparatus for displaying medical images**

(30) Priority: 09.11.1999 JP 31789099
(71) Applicant: KONICA CORPORATION, Tokyo (JP)
(72) Inventor: Nagatsuka, Sumiya, Sayama-machi, Saitama.ken (JP); Yoshimura, Hitoshi, Hino-shi, Tokyo 191-8511 (JP)
(74) Representative: Henkel, Feiler, Hänzel

(57) **Abstract**

The present invention concerns a medical image displaying method and a medical image displaying apparatus, which are suitable for displaying radiographic images. The medical image displaying apparatus displays the medical image based on medical image digital data, and includes an image-processing section to process the medical image digital data and an image displaying section to display the medical image based on the medical image digital data processed by the image-processing section. The medical image displaying apparatus displays a slantwise image, which is obtained by rotating the medical image on either a rotating axis included in an image plane of the medical image or another rotating axis located outside the image plane and being in parallel with the image plane, and then, projecting a rotated medical image onto the image plane of the medical image before rotating.

## Description

### BACKGROUND OF THE INVENTION

The present invention relates to a method and apparatus for displaying medical images, and specifically relates to a medical image displaying method and a medical image displaying apparatus, which are suitable for displaying radiographic images.

Conventionally, when a doctor makes diagnosis (also referred to as an image diagnosis or an image-inspection) by employing radiographic images, he has made diagnosis mainly by viewing a film on which the radiographic image is photographed. There have been such problems, however, that a large amount of radiographic image films, which are photographed in a hospital as a whole, requires a large amount of spaces for storing them, and images have changed in quality associating with the deterioration of the films, and it is difficult for the doctor to search out a specific film on which a past image of a specific patient is recorded, when the doctor wishes to compare the present image with the past image in regard to the specific patient. In addition, it has been desired to reduce the amount of films, from the environmental protection point of view.

To overcome the abovementioned problems, a system, which digitizes the radiographic images into the digital image data to store them in a memory and rapidly retrieves any desired image at any time, has been progressively developed recently.

According to the system, the radiographic images are displayed on a monitor display, such as a CRT, a liquid crystal display, etc., based on such the digital image data, so that the doctor can make diagnosis by viewing images displayed on the monitor display. It has been revealed, however, that the abovementioned system includes such a very serious problem for the medical diagnosis that a diseased part is liable to be overlooked by the doctor at the time of diagnosis made by using the monitor display, compared to the diagnosis made by using the radiographic image film.

As a result of intensive study for the abovementioned problem, the present inventors have found the following facts. Conventionally, when the doctor makes diagnosis by using the radiographic image film, it has been easy for the doctor to find out a diseased part photographed in the film, since the doctor has had such know-how that the doctor rotates or moves the film in various directions in order to unconsciously change the special-frequency of the image into the most suitable special-frequency for finding out the diseased part. On the other hand, since the medical radiographic images displayed on the monitor have neither rotated nor moved, the doctor has been compelled to view them at a fixed special-frequency. Accordingly, it has been difficult for the doctor to find out the diseased part when using the monitor, since the doctor can neither view the image at the most perceptible special-frequency nor recognize a subtle change of the diseased part. The present invention is attained in view of the abovementioned facts.

Further, in the medical diagnosis employing radiographic image films, the method for viewing them includes know-how, which would be unique depending on each of doctors. For instance, a certain doctor would rotate or move the film when viewing the radiographic image, as aforementioned, while an experienced doctor can make diagnosis by analogizing the radiographic image to the cases, which he viewed in the past and memorized in his memory. On the other hand, flesh doctors or doctors having a little experience are liable to overlook a diseased part, compared to the experienced doctors, since they have not sufficiently acquired such know-how as mentioned above due to an insufficiency of experienced cases. Thus, it has been desired to improve the reliability of diagnoses made by such doctors. In short, the accuracy of diagnosis with viewing the film considerably depends on the experienced skill of the doctor. Accordingly, when the medical diagnoses are made by employing the radiographic image film, there has been happened such a fact that one diagnosis is more reliable than another diagnosis, depending on the experienced skill of the doctor.

### SUMMARY OF THE INVENTION

The present invention is attained in view of the abovementioned problems. To overcome the abovementioned drawbacks in conventional diagnosis systems, it is an object of the present invention to provide methods for displaying medical images and medical image displaying apparatus, in which medical radiographic images are processed in the form of digital data with such merits that the storing places of them can be significantly reduced and the deterioration of the image quality can be prevented, etc., and which make it easier for the doctor to recognize a diseased part in the similar manner when viewing films, while maintaining such the merits.

Further, another object of the present invention is to provide methods for displaying medical images and medical image displaying apparatus, which make it possible to co-own know-how, conventionally depending on the experiences of each doctor, and therefore, which make it possible for the doctor to make more equalized and more precise diagnoses than ever, namely, which make it possible even for flesh doctors or doctors having a little experience to make precise diagnosis.

Accordingly, to overcome the cited shortcomings, the abovementioned objects of the present invention can be attained by medical image displaying apparatus and medical diagnosis systems described as follow.
(1) A medical image displaying apparatus for displaying a medical image based on medical image digital data,
   comprising: an image-processing section to process the medical image digital data; and an image displaying section to display the medical image based on the medical image digital data processed by the image-processing section.
(2) The medical image displaying apparatus of item 1, wherein the medical image displaying apparatus dynamically displays the medical image.
(3) The medical image displaying apparatus of item 1, wherein the medical image displaying apparatus displays a slantwise image, which is obtained by rotating the medical image on either a rotating axis included in an image plane of the medical image or another rotating axis located outside the image plane and being in parallel with the image plane, and then, projecting a rotated medical image onto the image plane of the medical image before rotating.
(4) The medical image displaying apparatus of item 3, wherein the medical image displaying apparatus displays a plurality of slantwise images, each of which is rotating in each individual manner, in an image area.
(5) The medical image displaying apparatus of item 3, wherein the medical image displaying apparatus displays a plurality of slantwise images, each of which is rotating in each individual manner, at a same position by switching them one by one.
(6) The medical image displaying apparatus of item 1, wherein the medical image displaying apparatus displays a plurality of the medical images with regard to a same individual subject.
(7) The medical image displaying apparatus of item 6, wherein the medical image displaying apparatus displays a plurality of the medical images with regard to a same individual subject in an image area.
(8) The medical image displaying apparatus of item 6, wherein the medical image displaying apparatus displays a plurality of the medical images with regard to the individual subject at a same position by switching them one by one.
(9) The medical image displaying apparatus of item 6, wherein the medical image displaying apparatus displays a plurality of the medical images, with regard to a same specific section of the same individual subject, which are different each other in its photographic angle.
(10) The medical image displaying apparatus of item 6, wherein the medical image displaying apparatus displays a plurality of the medical images, with regard to a same specific section of the same individual subject, which are different each other in its photographic date or time.
(11) The medical image displaying apparatus of item 6, wherein the medical image displaying apparatus displays a plurality of the medical images, each of which corresponds to each of different sections of the same individual subject.
(12) The medical image displaying apparatus of item 6, wherein the medical image displaying apparatus displays a plurality of the medical images with regard to the same individual subject in such a manner that at least one of factors for a plurality of the medical images, such as a minimum density, a maximum density, a dynamic-range and an image size, is unified into a common value.
(13) The medical image displaying apparatus of item 1, wherein the medical image displaying apparatus displays a plurality of the medical images with regard to different subjects.
(14) The medical image displaying apparatus of item 13, wherein the medical image displaying apparatus displays a plurality of the medical images with regard to different subjects in an image area.
(15) The medical image displaying apparatus of item 13, wherein the medical image displaying apparatus displays a plurality of the medical images with regard to different subjects at a same position by switching them one by one.
(16) The medical image displaying apparatus of item 13, wherein the medical image displaying apparatus displays a plurality of the medical images with regard to different subjects in such a manner that at least one of factors for a plurality of the medical images, such as a minimum density, a maximum density, a dynamic-range and an image size, is unified into a common value.
(17) The medical image displaying apparatus of item 1, wherein the medical image displaying apparatus displays the medical image while continuously varying a luminous intensity of the medical image in either stepwise or non-stepwise.
(18) The medical image displaying apparatus of item 1, wherein the medical image displaying apparatus displays both normal and reverse images of the medical image.
(19) The medical image displaying apparatus of item 18, wherein the medical image displaying apparatus displays both normal and reverse images of the medical image in an image area.
(20) The medical image displaying apparatus of item 18, wherein the medical image displaying apparatus displays both normal and reverse images of the medical image at a same position by switching them one by one.
(21) The medical image displaying apparatus of item 1, wherein the medical image digital data includes at least one of data, such as personal data of a subject, data of a photographic date, data of a photographic section and data of a photographic angle, in addition to an image data, and the image processing section processes the image data and at least one of data, such as personal data of the subject, data of the photographic date, data of the photographic section and data of the photographic angle.
(22) The medical image displaying apparatus of item 1, wherein the medical image digital data is obtained by digitizing a plane image.
(23) The medical image displaying apparatus of item 1, wherein the medical image is a radiographic image.
(24) The medical image displaying apparatus of item 1, wherein the medical image displaying apparatus includes an examined-result inputting section for inputting an examined result diagnosed with the medical image, displayed on the image displaying section, by an examiner, and the image processing section relates data of the examined result with the medical image digital data.
(25) The medical image displaying apparatus of item 1, wherein the medical image displaying apparatus displays the medical image in such a manner that the medical image is vibrated (reciprocated) in a constant direction at a predetermined period.
(26) The medical image displaying apparatus of item 1, further comprising: an operating section, wherein the medical image displaying apparatus displays the medical image while moving the medical image based on an operating action for the operating section.
(27) A medical diagnosis system, comprising: a radiographic image photographing apparatus for photographing a medical image by irradiating radial-rays onto a subject to generate medical image digital data; and a medical image displaying apparatus for displaying the medical image based on the medical image digital data, the medical image displaying apparatus comprising an image-processing section to process the medical image digital data, and an image displaying section to display the medical image based on the medical image digital data processed by the image-processing section.
(28) The medical diagnosis system of item 27, further comprising: a memory section for storing a plurality of the medical image digital data generated by the radiographic image photographing apparatus, wherein the medical image displaying apparatus displays the medical image based on the medical image digital data retrieved from the memory section.
(29) A medical image displaying method for displaying a medical image based on medical image digital data, comprising the steps of: processing the medical image digital data; and displaying the medical image based on the medical image digital data processed.

Further, to overcome the abovementioned problems, other medical image displaying apparatus and medical image displaying methods, embodied in the present invention, will be described as follow:
(30) A medical image displaying method, characterized in that, in the medical image displaying method for displaying a medical image, a slantwise image, which is obtained by rotating the medical image on either a rotating axis included in an image plane of the medical image or another rotating axis located outside the image plane and being in parallel with the image plane, and then, projecting a rotated medical image onto the image plane of the medical image before rotating, is displayed.

A medical image displaying apparatus, characterized in that the medical image displaying apparatus, for displaying a medical image, comprises an image-processing means for displaying a slantwise image, which is obtained by rotating the medical image on either a rotating axis included in an image plane of the medical image or another rotating axis located outside the image plane and being in parallel with the image plane, and then, projecting a rotated medical image onto the image plane of the medical image before rotating. According to the abovementioned invention, it becomes possible to view a slantwise image by rotating the medical image on either a rotating axis included in an image plane of the medical image or another rotating axis located outside the image plane and being in parallel with the image plane, and then, projecting a rotated medical image onto the image plane of the medical image before rotating and it becomes possible to display the medical image on the monitor in a manner similar to that of viewing the medical image photographed on the film.
(31) A medical image displaying method, characterized in that, when generating and displaying the slantwise image of the medical image, the rotating operations for generating the slantwise image are continuously performed in stepwise or non-stepwise mode to generate a plurality of images having different rotating states, which are displayed by arranging on a screen.

A medical image displaying apparatus, characterized in that the image-processing means continuously performs the rotating operations for generating the slantwise image in stepwise or non-stepwise mode to generate a plurality of images having different rotating states, which are displayed by arranging on a screen.

According to the abovementioned invention, since a plurality of slantwise images are generated by continuously performing the rotating operations for generating the slantwise image in stepwise or non-stepwise mode, it is possible to display them by arranging on a screen and it becomes possible to display the medical image on the monitor in a manner similar to that of viewing the medical image photographed on the film. In this case, since a plurality of slantwise images having different rotating states are displayed, it is possible to instantaneously compare a slantwise image with a next slantwise image, which is slightly different from the next in its viewing angle, and a sense of viewing film can be obtained.
(32) A medical image displaying method, characterized in that, when generating and displaying the slantwise image of the medical image, the rotating operations for generating the slantwise image are continuously performed in stepwise or non-stepwise mode to generate a plurality of slantwise images having different rotating states, and one of the slantwise images can be switched to either a display mode or a non-display mode with respect to others.

A medical image displaying apparatus, characterized in that the image-processing means continuously performs the rotating operations for generating the slantwise image in stepwise or non-stepwise mode to generate a plurality of images having different rotating states, and one of the slantwise images can be switched to either a display mode or a non-display mode with respect to others.

According to the abovementioned invention, since a plurality of slantwise images are generated by continuously performing the rotating operations for generating the slantwise image in stepwise or non-stepwise mode, and one of the slantwise images is switched to either a display mode or a non-display mode with respect to others, it becomes possible to display the medical image on the monitor in a manner similar to that of viewing the medical image photographed on the film. In this case, the viewer would sense as if a slantwise direction of a film image, viewed from slightly different direction, is changed.
(33) A medical image displaying method, characterized in that, when generating and displaying the slantwise image of the medical image, the rotating operations for generating the slantwise image are continuously performed in stepwise or non-stepwise mode to generate a plurality of slantwise images having different rotating states, and a plurality of slantwise images having different rotating states are displayed at a same position by switching them one by one.

A medical image displaying apparatus, characterized in that the image-processing means continuously performs the rotating operations for generating the slantwise image in stepwise or non-stepwise mode to generate a plurality of images having different rotating states, and displays a plurality of slantwise images having different rotating states at a same position by switching them one by one.

According to the abovementioned invention, since a plurality of slantwise images are generated by continuously performing the rotating operations for generating the slantwise image in stepwise or non-stepwise mode, and are displayed at a same position by switching them one by one, it becomes possible to display the medical image on the monitor in a manner similar to that of viewing the medical image photographed on the film. In this case, the viewer would sense as if a film image, viewed from slightly different direction, is instantaneously replaced by another film image.
(34) A medical image displaying method, characterized in that, in the medical image displaying method for displaying medical images, a plurality of medical images, which are photographed for a same subject from substantially a same direction, are displayed by aligning them in the horizontal direction.

A medical image displaying apparatus, characterized in that, in the medical image displaying apparatus for displaying medical images, a plurality of medical images, which are photographed for a same subject from substantially a same direction, are displayed by aligning them in the horizontal direction.

According to the abovementioned invention, since a plurality of medical images, which are photographed for the same subject from substantially the same direction, are displayed by aligning them in the horizontal direction, a doctor can easily grasp many images in his eyesight, and it becomes possible to display the medical image on the display in a manner similar to that of viewing the medical image photographed on the film.
(35) A medical image displaying method, characterized in that the medical images, aligned in the horizontal direction, are displayed by switching between a displaying mode and a non-displaying made at a predetermined period, or by switching the luminous intensity of the medical image between high and low levels.

A medical image displaying apparatus, characterized in that, in the medical image displaying apparatus for displaying a medical image, the medical images, aligned in the horizontal direction, are displayed by switching between a displaying mode and a non-displaying mode at a predetermined period, or by switching the luminous intensity of the medical image between high and low levels.

According to the abovementioned invention, since the medical images, aligned in the horizontal direction, are displayed by switching between a displaying mode and a non-displaying mode at a predetermined period, or by switching the luminous intensity of the medical image between high and low levels, an afterimage effect of eyesight makes it easier for the doctor to grasp various kinds of image variations, and it becomes possible to display the medical image on the display in a similar manner when viewing the medical image photographed on the film.
(36) A medical image displaying method, characterized in that a displaying mode for displaying an image, obtained by slantingly viewing a plane including a medical image, is provided.

A medical image displaying apparatus, characterized in that a displaying mode for displaying an image, obtained by slantingly viewing a plane including a medical image, is provided.

According to the abovementioned invention, since the medical image can be viewed as a slantwise image, it becomes possible to display the medical image on the display in a similar manner when viewing the medical image photographed on the film.
(37) A medical image displaying method, characterized in that, in the medical image displaying method for displaying a medical image, the medical image concerned is displayed with the same kind of the past medical images on the same screen.

A medical image displaying apparatus, characterized in that, in the medical image displaying apparatus for displaying a medical image, a image memory means for storing medical images, an image-processing means for reading out the medical image concerned and the same kind of the past medical images from the image memory means to display the medical image with aligning the past medical images on the same screen, and a medical image displaying means for displaying the images processed by the image-processing means, are provided.

According to the abovementioned invention, since the medical image concerned is displayed with the same kind of the past medical images on the same screen, the doctor can easily grasp various kinds of image variations in the medical image concerned, and it becomes possible to display the medical images on the display in a similar manner when viewing a lot of the medical images photographed on the films, which are aligned in front of the doctor.
(38) A medical image displaying method, characterized in that, in the medical image displaying method for displaying a medical image, the medical image is displayed in such a manner that one of factors, including a minimum and maximum density, a dynamic-range, and an image size, coincides with that of the medical image in the past.

A medical image displaying apparatus, characterized in that, in the medical image displaying apparatus for displaying a medical image, there is provided an image processing means, which applies an image processing for matching one of factors, including a minimum and maximum density, a dynamic-range, and an image size, with that of the medical image in the past. According to the abovementioned invention, since the medical image is displayed in such a manner that one of factors, including a minimum and maximum density, a dynamic-range, and an image size, coincides with that of the medical image in the past, the doctor can easily grasp various kinds of image variations in the medical image concerned, and it becomes possible to display the medical images on the display in a similar manner when viewing a lot of the medical images photographed on the films, which are aligned in front of the doctor.
(39) A medical image displaying method, characterized in that, in the medical image displaying method for displaying a medical image, the medical image is displayed in such a manner that the image size coincides with that of the medical image in the past.

A medical image displaying apparatus, characterized in that, in the medical image displaying apparatus for displaying a medical image, there is provided an image processing means, which applies an image processing for matching the image size with that of the medical image in the past.

According to the abovementioned invention, since the medical image is displayed in such a manner that the image size coincides with that of the medical image in the past, the doctor can easily grasp various kinds of image variations in the medical image concerned, and it becomes possible to display the medical images on the display in a similar manner when viewing a lot of the medical images photographed on the films, which are aligned in front of the doctor.
(40) A medical image displaying method, characterized in that, in the medical image displaying method for displaying a medical image, both normal and reverse images of the medical image concerned are displayed at a same position by alternately switching them.

A medical image displaying apparatus, characterized in that, in the medical image displaying apparatus for displaying a medical image, there is provided an image processing means, which performs an image processing for displaying both normal and reverse images of the medical image concerned at a same position by alternately switching them.

According to the abovementioned invention, since both normal and reverse images of the medical image concerned are displayed at a same position by alternately switching them, it becomes possible to eliminate such a case that the doctor overlooks the diseased part due to the deficiency of the monitor screen, and the doctor can easily grasp various kinds of image variations in the medical image concerned, and it becomes possible to display the medical images on the display in a similar manner when viewing a lot of the medical images photographed on the films, which are aligned in front of the doctor.
(41) A medical image displaying method, characterized in that, in the medical image displaying method for displaying a medical image, the normal and reverse images of the medical image concerned are displayed at upper and lower sides or right and left sides of the medical image concerned.

A medical image displaying apparatus, characterized in that, in the medical image displaying apparatus for displaying a medical image, there is provided an image processing means, which performs an image processing for displaying the normal and reverse images of the medical image concerned at upper and lower sides or right and left sides of the medical image concerned.

According to the abovementioned invention, since the normal and reverse images of the medical image concerned are displayed at upper and lower sides or right and left sides of the medical image concerned, it becomes possible to eliminate such a case that the doctor overlooks the diseased part due to the deficiency of the monitor screen, and the doctor can easily grasp various kinds of image variations in the medical image concerned, and it becomes possible to display the medical images on the display in a similar manner when viewing a lot of the medical images photographed on the films, which are aligned in front of the doctor.

### BRIEF DESCRIPTION OF THE DRAWINGS

Other objects and advantages of the present invention will become apparent upon reading the following detailed description and upon reference to the drawings in which:
Fig. 1 shows a structural block-diagram of a medical image management system (a medical diagnosis system) including an example of a medical image displaying apparatus, embodied in the present invention, and peripheral apparatus;
Fig. 2 shows an explanatory illustration of an image plane, typically indicating X-axis and Y-axis, serving as rotational axes;
Fig. 3 shows an explanatory illustration of medical images in various rotating states, embodied in the present invention;
Fig. 4(a), Fig. 4(b), Fig. 4(c) and Fig. 4(d) show explanatory illustrations of medical images in various displaying states, embodied in the present invention;
Fig. 5(a) and Fig. 5(b) show explanatory illustrations of medical images in various displaying states, embodied in the present invention;
Fig. 6 shows an explanatory illustration of medical images in various displaying states, embodied in the present invention; and
Fig. 7 shows an explanatory illustration of a medical image with images for comparison, embodied in the present invention.

### DETAILED DESCRIPTION OF THE PREFERRED EMBODIMENT

The medical image displaying apparatus, embodied in the present invention, is an apparatus for displaying medical images based on the medical image digital data, and comprises a medical image digital data processing section (hereinafter, referred to as the image processing section, for simplicity) to process the medical image digital data and a image displaying section to display the medical images based on the medical image digital data processed in the image processing section. In addition, it may be possible that the apparatus also includes an operating section, such as a keyboard, a various kinds of buttons, levers, etc., to input data for changing the displaying mode or the displaying state of the medical images.

In the image processing section, the medical image digital data is processed to perform a dynamic display mode, including a rotating display, a reversing display, a display of plural images, etc. of medical images, and a static display mode (to be detailed later). In addition, it is desirable that adjustments of the density, the dynamic-range and the image-size are also performed in the image processing section. A CPU, a LSI, an IC, etc., can be cited as a concrete example of the image processing section, and of cause, each of them is possibly controlled by software.

Further, a CRT monitor, a liquid-crystal display, an organic EL, a plasma display, etc., can be cited as a concrete example of the image displaying section.

Further, it is also possible that the medical image displaying apparatus includes a memory section to store medical image data. Digital image-recording media, such as a memory, a hard disk, various kinds of RAMs (including DRAM, SRAM, a flash memory, a miniature card, a compact flash, a smart media, PC card, etc.), various kinds of ROMs (including a mask ROM, EPROM, EEPROM, etc.), CD-ROM, CD-RW, CD-R, MT, DAT, FD, MD, MO, DVD, etc., and recording/reproducing apparatus of those media can be cited as concrete examples of the memory section. Alternatively, it is also possible that the medical image displaying apparatus does not include the memory section, but a medical diagnosis system (to be detailed later) includes the memory section. Of cause, it is also possible that the medical image displaying apparatus include the memory section, and further, another memory apparatus is included as a diagnosis system.

In the medical image displaying apparatus, it is possible to display the medical image both dynamically and statically. Incidentally, in the present specification, the description of "to display the medical image dynamically" means that the medical image, displayed on the monitor, is continuously changing during the displaying action. For instance, in case of the rotating display (to be detailed later), the medical image, displayed on the monitor, is continuously rotating in either stepwise or non-stepwise.

It is desirable that the medical image displaying apparatus can display a slantwise image, which is obtained by rotating the medical image on either a rotating axis included in the image plane of the medical image or another rotating axis located outside the image plane and being in parallel with the image plane, and then, projecting a rotated medical image onto the image plane of the medical image before rotating. Incidentally, it is applicable that the medical image displaying apparatus displays either the dynamically rotating medical image, namely, the dynamic medical image continuously rotating in either stepwise or non-stepwise, or the static medical image stopped at a certain rotation angle. Further, it is also applicable to rotate the medical image on a rotating axis perpendicular to the image plane of the medical image.

Further, it is also applicable that the medical image displaying apparatus displays a plurality of slantwise images, each of which is rotating in each individual manner, in the same image area. In this case, it is desirable that the slantwise images, displayed on the screen, are aligned in horizontal direction. In addition, it is also desirable that the slantwise images are based on the same medical image digital data, but only the rotating manners of them are different each other. Further, it is also applicable that each of the slantwise images is displayed either dynamically or statically.

Still further, it is also applicable that the medical image displaying apparatus displays a plurality of slantwise images, each of which is rotating in each individual manner, at the same position by switching them one by one.

Still further, it is also applicable that the medical image displaying apparatus displays a medical image in such a manner that the medical image is vibrated (reciprocated) in a constant direction at a predetermined period. Alternatively, instead of automatically vibrating the medical image in a constant direction at a predetermined period, it is also applicable that the medical image, displayed on the screen, moves based on the actions of the operating section, such as a lever, a mouse, etc., performed by the diagnosis inspector.

Still further, it is desirable that the luminous intensity of the medical image can be varied in the medical image displaying apparatus. Although it is desirable that the medical image is displayed dynamically at the fixed position while the luminous intensity of the medical image is varied in either stepwise or non-stepwise, it is also applicable that a plurality of medical images, the luminous intensities of which are different each other, are displayed statically in the same image area.

Still further, it is desirable that the medical image displaying apparatus can display both normal and reverse images of the medical image. It is applicable that the normal and reverse images of the medical image are displayed within the same image area, or separately displayed at the same position by switching action. In addition, this action of displaying the normal and reverse images of the medical image can be regarded as one mode of the aforementioned image rotating operation.

Still further, it is desirable that the medical image displaying apparatus can display a plurality of medical images with regard to an individual patient. Incidentally, it is possible that the medical images with regard to the individual patient are displayed in the same image area. In this case, each of the medical images could be displayed either dynamically or statically in the various displaying mode, such as the rotation, the reversion, the variation of the luminous intensity, etc. In addition, each of the medical images with regard to the individual patient could be separately displayed at the same position by switching action. In this case, it is desirable that the medical images are continuously displayed on the screen by automatically switching them one by one.

Incidentally, it is applicable that, when displaying a plurality of medical images with regard to an individual patient, the medical image displaying apparatus displays a plurality of medical images of a specific section of the individual patient, which are different each other in its photographic angle. For instance, it is possible to display an image of the chest of the patient photographed from the direct front side and another image of the chest photographed from the slightly inclined position. Incidentally, the abovementioned term of "section" indicates a part of the patient's body, such as a foot, a chest, an abdomen, etc. In this case, it is desirable that the photographic dates of the medical images substantially coincide each other, such as the same day. Further, the photographic angle may be a slightly changed angle within 45°, or a largely changed angle more than 45°.

Further, it is applicable that, when displaying a plurality of medical images with regard to an individual patient, the medical image displaying apparatus displays a plurality of medical images of a specific section of the individual patient, which are different each other in its photographic date. For instance, it is possible to display an image of the chest of the patient, which was photographed from the direct front side one year before and another image of the chest, which is photographed at present. In this case, it is desirable that the differences of the photographic angles between the medical images are within 30°, or more desirably, coincide each other.

Further, it is applicable that, when displaying a plurality of medical images with regard to an individual patient, the medical image displaying apparatus displays a plurality of medical images, each of which corresponds to each of different sections of the individual patient. In this case, it is desirable that the photographic dates of the medical images substantially coincide each other, such as the same day.

Still further, it is desirable that the medical image displaying apparatus can display a plurality of medical images with regard to different patients. Incidentally, it is possible that the medical images with regard to the different patients are displayed in the same image area. In this case, each of the medical images could be displayed either dynamically or statically in the various displaying mode, such as the rotation, the reversion, the variation of the luminous intensity, etc. In addition, each of the medical images with regard to the different patients could be separately displayed at the same position by switching action. In this case, it is desirable that the medical images are continuously displayed on the screen by automatically switching them one by one.

Still further, it is also applicable that the medical image displaying apparatus displays a dynamic medical image, which is continuously expanding or reducing its image size, in a similar manner as the doctor brings the film close to his eyes or apart from his eyes. In this case, the doctor can obtain the same effect as that of manually bringing the film close to or apart from his eyes. It is desirable that the medical image can be expanded or reduced at a center of a predetermined position (desirably, the diseased part) designated by the doctor.

Incidentally, it is desirable that, when displaying a plurality of medical images with regard to an individual patient, and with regard to different patients, at least one of factors, including a minimum and maximum density, a dynamic-range, and an image size, for displaying a plurality of medical images of the individual patient, is unified into a common value. It is more desirable that each of all factors, including a minimum and maximum density, a dynamic-range, and an image size, is unified into a common value.

It may also say that the medical image displaying apparatus, embodied in the present invention, has a displaying mode for assisting the medical diagnosis, which makes it easy to recognize a diseased part of the patient as well as viewing the film, in order that doctors can co-own know-how, which depends on the experience of the doctor, even if medical images are displayed on the monitor.

Incidentally, when the medical image displaying mode, embodied in the present invention, is performed as the displaying mode for assisting the medical diagnosis, the operating mode could be switched to the displaying mode for assisting the medical diagnosis by operating the mode conversion switch, or could be automatically switched by turning on the power switch of the apparatus. Alternatively, it is also applicable that the medical image displaying apparatus merely has a rotation-displaying mode, a reversiondisplaying mode, plural images displaying mode, etc., instead of the displaying mode for assisting the medical diagnosis.

Further, it is applicable that the medical image digital data includes at least one of data, such as personal data of the patient, data of the photographic date, data of the photographic section and data of the photographic angle, in addition to the image data. In this case, it is desirable that the image processing section processes not only the image data, but also at least one of data, such as personal data of the patient, data of the photographic date, data of the photographic section and data of the photographic angle. Namely, the image processing section performs, for instance, retrieving actions based on one of the abovementioned data, or relating action between the image data and one of the abovementioned data. Further, it is also applicable that another processing apparatus included in the medical diagnosis system performs the abovementioned operations, instead of the medical image displaying apparatus.

Still further, it is desirable that medical image digital data is obtained by digitizing a plane image. Specifically, it is desirable that the medical images are the radiographic images obtained by photographing the patients by means of the radiographic apparatus.

Still further, it is also applicable that the medical image displaying apparatus includes an examined-result inputting section for inputting an examined result diagnosed with medical images displayed on the image displaying section by an examiner (for instance, a doctor, a physician, etc.). In this case, it is desirable that the image processing section relates the examined result with the medical image digital data, when the examiner inputs the examined result into the examined-result inputting section. Keyboards, pushbuttons, voice recognition apparatus, scanners, etc. can be cited as examples of the examined-result inputting section.

Still further, the medical diagnosis system is at least comprised of the medical image displaying apparatus and the radiographic image photographing apparatus, which captures the medical image by irradiating radial-rays to the subject and digitize the radiographic image into the medical image digital data. It is desirable that the radiographic image photographing apparatus generates the image data by directly converting the radial rays, penetrated through the subject, to electronic energy or by converting the radial rays to photo energy and further converting the photo energy to electronic energy. It is also applicable that, in addition to the abovementioned apparatus, the medical diagnosis system is further comprised of a memory apparatus for storing a plurality of the medical image digital data generated by the radiographic image photographing apparatus, and the medical image displaying apparatus displays medical images based on the medical image digital data retrieved from the memory apparatus. Further, it is also applicable that the medical diagnosis system is further comprised of a processing apparatus for processing the personal data of the patient and the data of diagnosis results, which are related to the medical image digital data. A server or other personal computers could be employed as the memory apparatus or the diagnosis apparatus. Further, it is also applicable that the medical diagnosis system is further comprised of a laser imager for recording the radiographic image onto a paper sheet or a film. The radiographic image photographing apparatus could be integrated with the medical image displaying apparatus, or those may be separate apparatus, which are coupled each other in the network. In case of separate apparatus, those are possibly coupled each other in either a wired or a wireless communication mode. Of cause, it is applicable that a plurality of the medical image displaying apparatus and a plurality of the radiographic image photographing apparatus are provided in the medical diagnosis system. Further, the abovementioned system can be also utilized for a medical image management system.

Next, referring to the drawings, a concrete embodiment of the present invention will be detailed in the following.

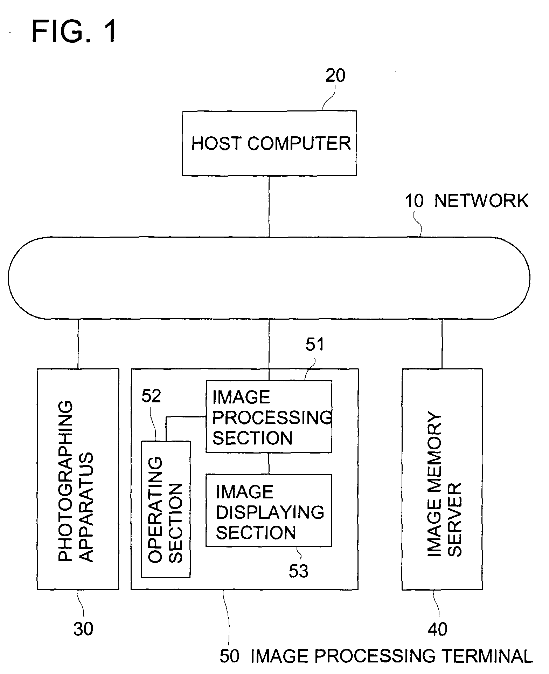

Fig. 1 shows a structural block-diagram of the medical image management system (the medical diagnosis system) including an example of the medical image displaying apparatus, embodied in the present invention, and peripheral apparatus.

Initially, the medical image displaying apparatus,
embodied in the present invention, and the total configuration of the medical image management system will be detailed in the following, referring to the structural block-diagram shown in Fig. 1.

In Fig. 1, numeral 10 indicates a network in which various kinds of apparatus (to be detailed later) are coupled each other, and numeral 20 indicates a host-computer, serving as a controlling means, for generating reservation data with regard to the accepted reservations for medical examinations or inspections, managing medical image data photographed, and controlling retrieving and transferring actions for medical image data.

Numeral 30 indicates a photographing apparatus for capturing the radiographic image of the subject and generating a medical image data by reading the image capturing result. Numeral 40 indicates an image memory server for storing the medical image data generated by capturing the radiographic image.

Numeral 50 indicates an image processing terminal,
serving as the medical image displaying apparatus embodied in the present invention, for displaying medical images, which are utilized for an image inspection of the radiographic image. Incidentally, image processing terminal 50 is provided with image processing section 51, serving as an image processing means, for applying various kinds of processing to medical images, operating section 52 to which various kinds of commands are inputted when medical images are processed, and image displaying section 53, serving as an image displaying means, for displaying medical images on the CRT display, etc.

Incidentally, although the configuration of the medical image management system is typically illustrated in Fig. 1, it is also possible that photographing apparatus 30 and image processing terminal 50 are equipped in each of sections (medical sections). Further, it is also possible that image processing terminal 50 is directly coupled to photographing apparatus 30 or a reading apparatus (not shown in the drawings) without coupling through the network.

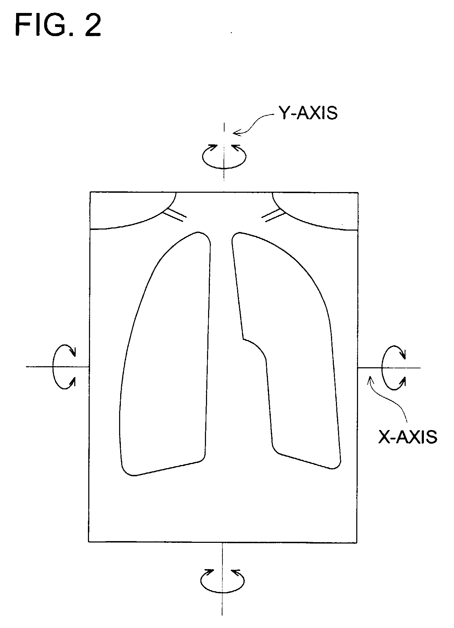

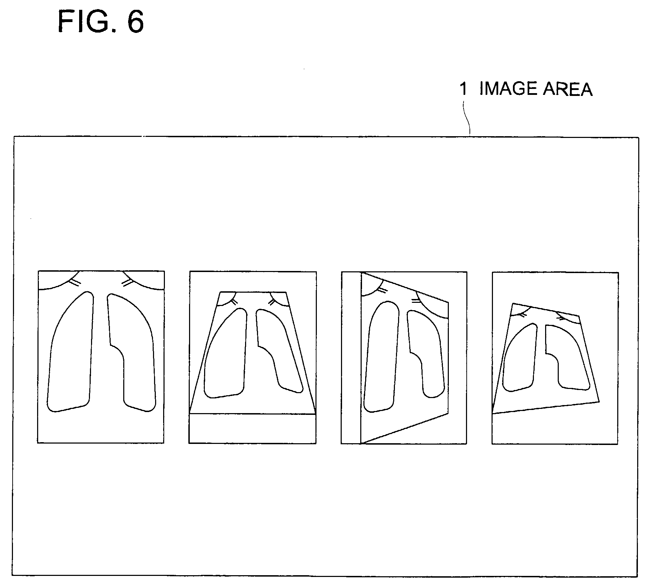

Now, the procedures for displaying medical images and actions of the medical image displaying apparatus will be detailed in the following, referring to Figs. 2-7.

Photographing apparatus 30 captures the radiographic image based on the photographing reservation data generated by host-computer 20, and generates the medical image data with respect to the subject. Then, the medical image data is stored in image memory server 40, under the controlling actions of host-computer 20.

When a command for displaying images is inputted from operating section 52 of image processing terminal 50, host-computer 20 transfers the concerned medical image data to image-processing terminal 50 from image memory server 40.

When a doctor inputs a command of the rotational displaying mode of the medical image from operating section 52 of image-processing terminal 50, image-processing section 51 processes the medical image data, so that the medical image is rotated around a rotating axis, which is parallel to the image plane of the medical image and included in the image plane or located outside the image plane, and then, the rotated medical image is projected onto the original image plane to generate a slantwise image to be displayed.

Fig. 2 shows an explanatory illustration of the image plane, typically indicating X-axis and Y-axis, serving as rotational axes. Image-processing section 51 performs such a three-dimensional image processing that the medical image revolves on either X-axis or Y-axis, or on both X-axis and Y-axis. Incidentally, the selection of the rotational axes depends on the command sent from operating section 52.

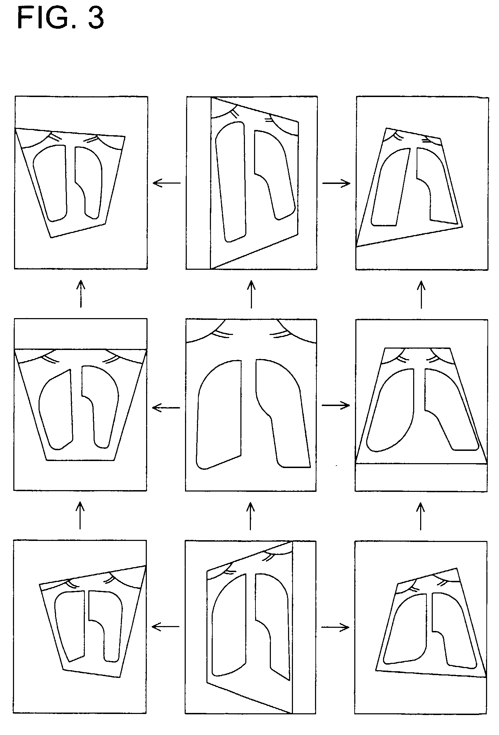

Fig. 3 shows an explanatory illustration of medical images in various rotating states, indicating the original medical image before processing at the center, the medical images revolving on X-axis at right and left sides of the original medical image, the medical images revolving on Y-axis at upper and lower sides of the original medical image, and the medical images revolving on both X-axis and Y-axis at diagonal sides of the original medical image, respectively.

Incidentally, although the rotational axes of X-axis and Y-axis pass through the center of the medical images exemplified in Fig. 3, when the rotational axes of X-axis and Y-axis are located outside the image plane of the medical images, the perspective sense of view for the rotated medical images would be different from those shown in Fig. 3.

Then, the medical image, generated by image-processing operations in the image-processing section 51, is displayed on the monitor of the image displaying section 53.

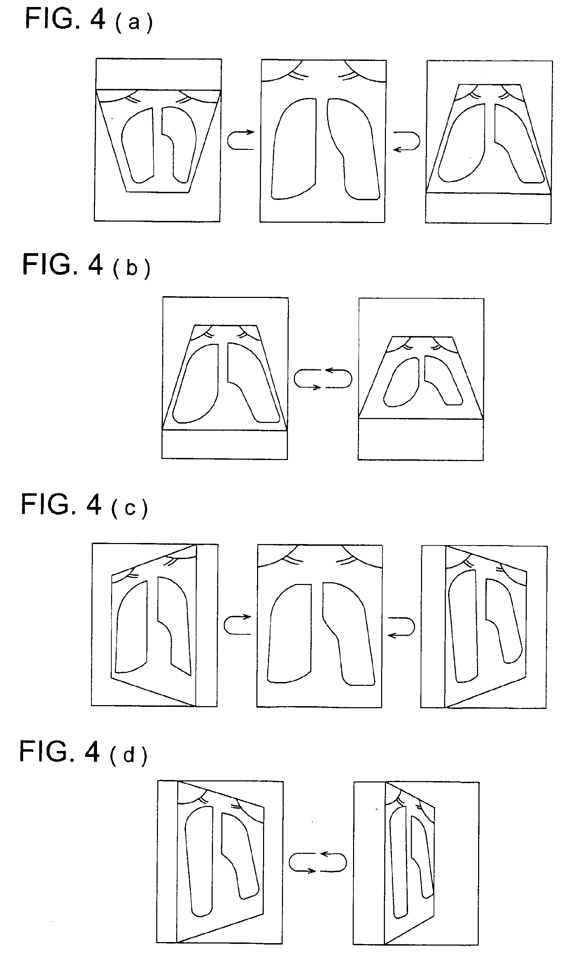

When the medical image is displayed on the monitor, the following display modes are available.
(1) A plurality of images, being different each other in its rotating state, are generated by continuously performing the rotating operations for generating the slantwise image in stepwise or non-stepwise mode, to display the currently newest image of them. In this case, as shown in Fig. 4(a) and Fig. 4(c), the rotating image, which is currently changing moment by moment, can be displayed by reciprocally rotating the image on either X-axis or Y-axis, serving as the rotational axes. In the abovementioned display mode, since the monitor can display the medical image in a similar manner that the doctor manually rotates the radiographic image film, it becomes possible for the doctor to view the medical image in substantially the same situation as that of viewing the medical image photographed on the film. Incidentally, as shown in Fig. 4(b) and Fig. 4(d), it is also possible to display such a slantwise image that only one end of the slantwise image is changing in one direction, without displaying a front view of the image.
(2) It is also possible to display the medical images in such a manner that the medical image, which is currently changing moment by moment as shown in Fig. 4(a), is displayed at one side area of the monitor screen in image displaying section 53, while the medical image, which is currently changing moment by moment as shown in Fig. 4(b), is displayed at the other side area of the monitor screen in image displaying section 53, instead of displaying only one of the medical images shown in Figs. 4(a)-4(d). Even in this kind of displaying mode, since the monitor can display the medical image in a similar manner that the doctor manually rotates the radiographic image film, it becomes possible for the doctor to view the medical image in substantially the same situation as that of viewing the medical image photographed on the film. Further, since a plurality of medical images, which are different each other in its rotating state and generated on rotational axes being different each other, are displayed at the same displaying position by the switching operation, the image inspection can be performed more easily than that in item (1).
(3) In the displaying mode described in item (1) or item (2), it is also possible to statically display the slantwise image by stopping the rotating action of the medical image based on the command signals sent from operating section 52. Alternatively, it is also possible to dynamically display the medical image again by resuming the rotating action of the medical image once statically displayed. Further, it is also possible to temporarily stop the movement of the medical image revolving on a certain rotational axis and to resume the movement of the medical image revolving on another rotational axis.

When making diagnosis by comparing medical images including an unclear part, rotating the medical image in a manner described above would change an appearance of peripheral images near the unclear part, suspected as a diseased part. It might be considered that continuously changing the rotating state of the medical image makes it easier to find out the diseased part under the medical inspection. Namely, it becomes possible to display the medical image on the monitor in a manner similar to that of viewing the medical image photographed on the film.

Further, since the reduction rate of the medical image varies depending on an exhibiting degree of the perspective sense of view, resulting in a variation of the relative resolution, it is desirable that an exhibiting degree of the perspective sense of view can be controlled by command signals sent from operating section 52.

Still further, in addition to the image processing for the rotating actions described above, it is also possible to display the medical image before rotating or the medical image after rotating in such a manner that the medical image is vibrated (reciprocated) in a constant direction at a predetermined period. In this case, the doctor inputs operational commands, with regard to the vibrating direction, the amplitude of the vibration, the period of the vibration, etc., from operating section 52. Image-processing section 51 processes the medical image data based on the command signals sent from operating section 52, so as to display the medical image in the vibration mode. Since the medical image, reciprocating at a predetermined period, is displayed on the monitor screen, an afterimage effect of eyesight makes it easier for the doctor to grasp various kinds of image variations (such as a diseased part), and it becomes possible to display the medical image on the monitor in a manner similar to that of viewing the medical image photographed on the film.

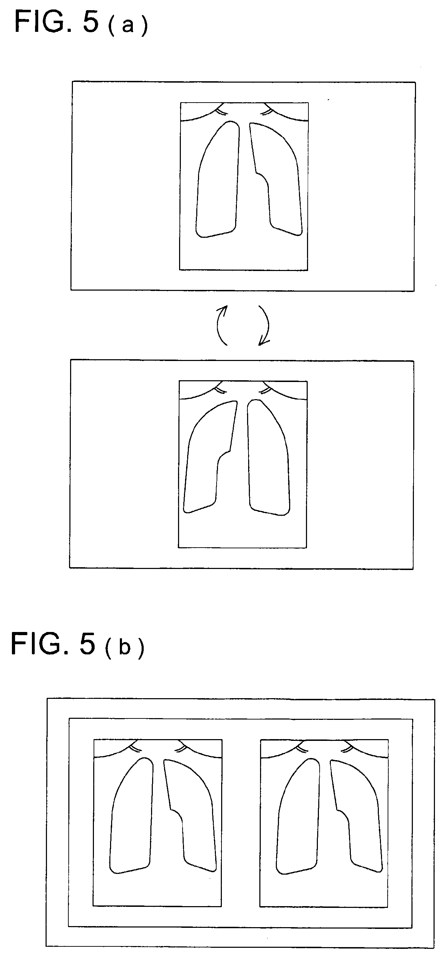

Fig. 5(a) and Fig. 5(b) show an explanatory illustration of images displayed on the monitor screen, indicating another embodiment of the present invention. The CRT display or the liquid-crystal display, equipped in image displaying section 53, does not necessary displays a uniform image over the whole area of its screen. For instance, sometimes, displaying properties of the CRT display screen, such as brightness, contrast and γ characteristic, may vary from right area to left area in the screen, due to the variation of light-emitting materials employed for the screen. In addition, sometimes, the similar problem would arise due to a change of the passage of time. Accordingly, image-processing section 51 alternately generates a normal medical image (shown in upper side of Fig. 5(a)) and a reverse medical image in which images of right and left side areas are reversed (shown in lower side of Fig. 5(a)), at a constant period, during processing the medical image. Then, the normal medical image and the reverse medical image are alternately displayed on the monitor screen in image displaying section 53. Accordingly, alternately viewing the normal medical image and the reverse medical image, displayed in image displaying section 53, makes it easier for the doctor to recognize the difference between them, even if a certain deficiency exists in one of right and left areas of the monitor screen. Therefore, it becomes possible to eliminate such a case that the doctor overlooks a diseased part in the medical image due to the variation of the displaying properties of the monitor screen.

Incidentally, it is also possible to display the same medical images aligned in right and left on the monitor screen in image displaying section 53, as shown in Fig. 5(b). In this case, alternately viewing the right and left medical images also makes it easier for the doctor to recognize the difference between them, even if a certain deficiency exists in one of right and left areas of the monitor screen. Therefore, it becomes possible to eliminate such a case that the doctor overlooks a diseased part in the medical image due to the variation of the displaying properties of the monitor screen. In addition, the variations of displaying modes, such as a simultaneous displaying mode of the right and left medical images, an alternate displaying mode of the right and left medical images, a moving mode in right and left directions, etc., are available for the abovementioned embodiment.

Further, in the abovementioned embodiment, when the MTF characteristic (Modulation Transfer Function) of the monitor screen in image displaying section 53 is deteriorated at a specific spatial-frequency, it is possible to compensate the MTF characteristic in such a manner that the MTF characteristic of the monitor screen is measured in advance, and the specific spatial-frequency is emphasized based on the measurement result of the MTF characteristic in image-processing section 51. Conversely, when the MTF characteristic is protruded at a specific spatial-frequency, it is also possible to attenuate the specific spatial-frequency, as well. Accordingly, since the medical images can be displayed on the monitor screen having substantially uniform properties irrespective of the MTF characteristic, the possibility of overlooking a diseased part, etc. reduces significantly. Therefore, it becomes possible to display the medical image, being similar to that of the film, on the monitor screen.

Still further, it is desirable that image-processing section 51 performs such an image processing that a density characteristic of the film employed in photographing section 30 and a density characteristic of the monitor screen employed in image displaying section 53 are measured in advance, and image-processing section 51 compensates the difference between both density characteristics. According to the abovementioned image processing, it also becomes possible to display the medical image, being similar to that of the film, on the monitor screen.

Still further, in the abovementioned embodiment, it is possible to register a displaying pattern unique for each user in advance, with respect to displaying modes, such as a rotational displaying mode, a reversible displaying mode, a right and left displaying mode, etc., or parameters of those displaying modes by inputting them from operating section 52. With this registering operation, it becomes possible to instantaneously display the medical image in the desired displaying mode, such as a rotational displaying mode, a reversible displaying mode, a right and left displaying mode, etc., only by inputting a user's code, a registration number, etc. from operating section 52.

Still further, it is also possible to register a suitable displaying pattern in advance, corresponding to a purpose of diagnosis, a section for diagnosis, etc., as well as the displaying pattern unique for each user, and to instantaneously call out the suitable displaying pattern when using image-processing terminal 50. Accordingly, employing the displaying pattern suitable for the purpose or the section of diagnosis allows the user to perform the image-inspection in the same level as that of the skilled user, even if the user is not skilled in the image-inspection.

Incidentally, in the abovementioned embodiments, it is desirable that when a plurality of medical images, being different each other, are displayed within one image area of image displaying section 53, the medical images are aligned in the horizontal direction. This is because, displaying the medical images in the horizontal direction makes it easier to grasp many images in the eyesight, and it becomes possible to display the medical image on the monitor in a manner similar to that of viewing the medical image photographed on the film. In this horizontal displaying mode, it is applicable that the medical images are statically displayed in the horizontal direction, or dynamically displayed, so as to smoothly moves in the horizontal direction.

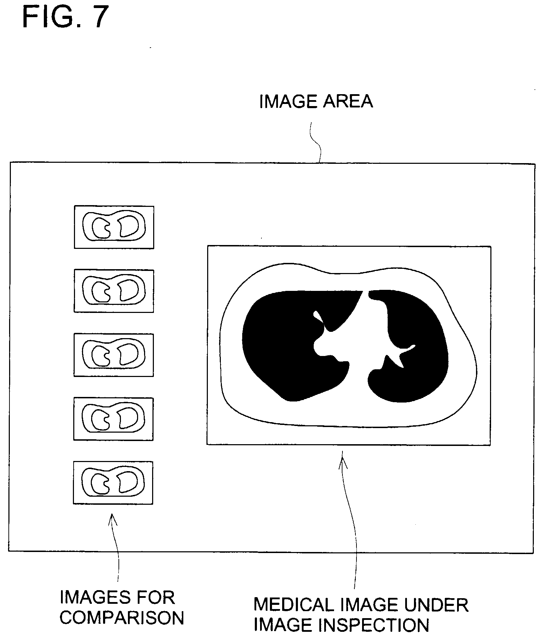

Further, when a medical image for a certain purpose of diagnosis is displayed on the monitor of image displaying section 53, it is possible that image-processing section 51 retrieves the medical image concerned as well as images for comparison, which are registered in image memory server 40 in advance, from image memory server 40, and the images for comparison, having a reduced image size, are displayed at the side area of the medical image concerned, as shown in Fig. 7. In this case, it is desirable that the images for comparison are a plurality of medical images, each of which is photographed during the passage of time from the initial time when the diagnosis was made for its purpose to the last time, namely, the past images of the same kind. Accordingly, displaying the images for comparison on the same image area allows the user to perform the image-inspection in the same level as that of the skilled user, even if the user is not skilled in the image-inspection.

Still further, the displaying modes, described in the following, would be available as the variations of the abovementioned embodiments.

The medical image is displayed by switching between a displaying mode and a non-displaying mode at a predetermined period, or by switching the luminous intensity of the medical image between high and low levels. In this case, an afterimage effect of eyesight makes it easier for the doctor to grasp various kinds of image variations, and it becomes possible to display the medical image on the monitor in a similar manner when viewing the medical image photographed on the film.

The medical image concerned is displayed with the same kind of the past medical images on the same screen. In this case, the past medical images make it easier for the doctor to grasp various kinds of image variations in the medical image concerned, and it becomes possible to display the medical images on the monitor in a similar manner when viewing a lot of the medical images photographed on the films, which are aligned in front of the doctor.

The medical image concerned is displayed in such a manner that the density and the dynamic-range of the image coincide with those of the past medical image. In this case, the doctor can easily grasp various kinds of image variations in the medical image concerned, and it becomes possible to display the medical images on the monitor in a similar manner when viewing a lot of the medical images photographed on the films, which are aligned in front of the doctor.

The medical image concerned is displayed in such a manner that the size of the image coincide with that of the past medical image. In this case, the doctor can easily grasp various kinds of image variations in the medical image concerned, and it becomes possible to display the medical images on the monitor in a similar manner when viewing a lot of the medical images photographed on the films, which are aligned in front of the doctor.

The normal and reverse images of the medical image concerned are alternately displayed at the same position on the monitor screen. In this case, it becomes possible to eliminate such a case that the doctor overlooks the diseased part due to the deficiency of the monitor screen, and the doctor can easily grasp various kinds of image variations in the medical image concerned, and it becomes possible to display the medical images on the monitor in a similar manner when viewing a lot of the medical images photographed on the films, which are aligned in front of the doctor.

The normal and reverse images of the medical image concerned are displayed at upper and lower sides or right and left sides of the medical image concerned. In this case, it becomes possible to eliminate such a case that the doctor overlooks the diseased part due to the deficiency of the monitor screen, and the doctor can easily grasp various kinds of image variations in the medical image concerned, and it becomes possible to display the medical images on the monitor in a similar manner when viewing a lot of the medical images photographed on the films, which are aligned in front of the doctor.

Incidentally, although the exemplified operations of the medical image management system, in which various apparatus are coupled each other through network 10, are described in the above, even when photographing apparatus 30 is directly coupled to image-processing terminal 50, or when photographing apparatus 30, image-processing terminal 50 and image memory server 40 are directly coupled each other with out employing network 10, the same effects as described in the above could be obtained by performing operations in the same manner as described in the above. Further, the image processing for the rotation, the reversion, the variation of luminous intensity, the movement, the enlargement, the reduction, etc., of the medical images are possibly achieved by the conventional image-processing methods.

As described above, according to the present invention, it becomes possible to provide methods for displaying medical images and medical image displaying apparatus, in which medical radiographic images are processed in the form of digital data with such merits that the storing places of them can be significantly reduced and the deterioration of the image quality can be prevented, etc., and which make it easier for the doctor to recognize a diseased part in the similar manner when viewing films, while maintaining such the merits.

Further, according to the present invention, it becomes possible to provide methods for displaying medical images and medical image displaying apparatus, which make it possible to co-own know-how, conventionally depending on the experiences of each doctor, and therefore, which make it possible for the doctor to make more equalized and more precise diagnoses than ever.

Disclosed embodiment can be varied by a skilled person without departing from the spirit and scope of the invention.

## Claims

1. A medical image displaying apparatus for displaying a medical image based on medical image digital data, comprising:
an image-processing section to process said medical image digital data; and
an image displaying section to display said medical image based on said medical image digital data processed by said image-processing section.

2. The medical image displaying apparatus of claim 1,
wherein said medical image displaying apparatus dynamically displays said medical image.

3. The medical image displaying apparatus of claim 1,
wherein said medical image displaying apparatus displays a slantwise image, which is obtained by rotating said medical image on either a rotating axis included in an image plane of said medical image or another rotating axis located outside said image plane and being in parallel with said image plane, and then, projecting a rotated medical image onto said image plane of said medical image before rotating.

4. The medical image displaying apparatus of claim 3,
wherein said medical image displaying apparatus displays a plurality of slantwise images, each of which is rotating in each individual manner, in an image area.

5. The medical image displaying apparatus of claim 3,
wherein said medical image displaying apparatus displays a plurality of slantwise images, each of which is rotating in each individual manner, at a same position by switching them one by one.

6. The medical image displaying apparatus of claim 1,
wherein said medical image displaying apparatus displays a plurality of said medical images with regard to a same individual subject.

7. The medical image displaying apparatus of claim 6,
wherein said medical image displaying apparatus displays a plurality of said medical images with regard to a same individual subject in an image area.

8. The medical image displaying apparatus of claim 6,
wherein said medical image displaying apparatus displays a plurality of said medical images with regard to said individual subject at a same position by switching them one by one.

9. The medical image displaying apparatus of claim 6,
wherein said medical image displaying apparatus displays a plurality of said medical images, with regard to a same specific section of said same individual subject, which are different each other in its photographic angle.

10. The medical image displaying apparatus of claim 6,
wherein said medical image displaying apparatus displays a plurality of said medical images, with regard to a same specific section of said same individual subject, which are different each other in its photographic date or time.

11. The medical image displaying apparatus of claim 6,
wherein said medical image displaying apparatus displays a plurality of said medical images, each of which corresponds to each of different sections of said same individual subject.

12. The medical image displaying apparatus of claim 6,
wherein said medical image displaying apparatus displays a plurality of said medical images with regard to said same individual subject in such a manner that at least one of factors for a plurality of said medical images, such as a minimum density, a maximum density, a dynamic-range and an image size, is unified into a common value.

13. The medical image displaying apparatus of claim 1,
wherein said medical image displaying apparatus displays a plurality of said medical images with regard to different subjects.

14. The medical image displaying apparatus of claim 13,
wherein said medical image displaying apparatus displays a plurality of said medical images with regard to different subjects in an image area.

15. The medical image displaying apparatus of claim 13,
wherein said medical image displaying apparatus displays a plurality of said medical images with regard to different subjects at a same position by switching them one by one.

16. The medical image displaying apparatus of claim 13,
wherein said medical image displaying apparatus displays a plurality of said medical images with regard to different subjects in such a manner that at least one of factors for a plurality of said medical images, such as a minimum density, a maximum density, a dynamic-range and an image size, is unified into a common value.

17. The medical image displaying apparatus of claim 1,
wherein said medical image displaying apparatus displays said medical image while continuously varying a luminous intensity of said medical image in either stepwise or non-stepwise.

18. The medical image displaying apparatus of claim 1,
wherein said medical image displaying apparatus displays both normal and reverse images of the medical image.

19. The medical image displaying apparatus of claim 18,
wherein said medical image displaying apparatus displays both normal and reverse images of said medical image in an image area.

20. The medical image displaying apparatus of claim 18,
wherein said medical image displaying apparatus displays both normal and reverse images of said medical image at a same position by switching them one by one.

21. The medical image displaying apparatus of claim 1,
wherein said medical image digital data includes at least one of data, such as personal data of a subject, data of a photographic date, data of a photographic section and data of a photographic angle, in addition to an image data, and said image processing section processes said image data and at least one of data, such as personal data of said subject, data of said photographic date, data of said photographic section and data of said photographic angle.

22. The medical image displaying apparatus of claim 1,
wherein said medical image digital data is obtained by digitizing a plane image.

23. The medical image displaying apparatus of claim 1,
wherein said medical image is a radiographic image.

24. The medical image displaying apparatus of claim 1,
wherein said medical image displaying apparatus includes an examined-result inputting section for inputting an examined result diagnosed with said medical image, displayed on said image displaying section, by an examiner, and said image processing section relates data of said examined result with said medical image digital data.

25. The medical image displaying apparatus of claim 1,
wherein said medical image displaying apparatus displays said medical image in such a manner that said medical image is vibrated (reciprocated) in a constant direction at a predetermined period.

26. The medical image displaying apparatus of claim 1, further comprising:
an operating section, wherein said medical image displaying apparatus displays said medical image while moving said medical image based on an operating action for said operating section.

27. A medical diagnosis system, comprising:
a radiographic image photographing apparatus for photographing a medical image by irradiating radial-rays onto a subject to generate medical image digital data; and
a medical image displaying apparatus for displaying said medical image based on said medical image digital data, said medical image displaying apparatus comprising,
an image-processing section to process said medical image digital data, and
an image displaying section to display said medical image based on said medical image digital data processed by said image-processing section.

28. The medical diagnosis system of claim 27, further comprising:
a memory section for storing a plurality of said medical image digital data generated by said radiographic image photographing apparatus, wherein said medical image displaying apparatus displays said medical image based on said medical image digital data retrieved from said memory section.

29. A medical image displaying method for displaying a medical image based on medical image digital data, comprising the steps of:
processing said medical image digital data; and
displaying said medical image based on said medical image digital data processed.
